(19) Europäisches Patentamt
European Patent Office
Office européen des brevets

(11) Publication number: 0 095 131
B1

(12) EUROPEAN PATENT SPECIFICATION

(45) Date of publication of patent specification: 23.09.87

(51) Int. Cl.⁴: C 04 B 41/87, C 04 B 35/58, B 23 B 27/14

(21) Application number: 83104856.6

(22) Date of filing: 17.05.83

(54) **Coated silicon nitride cutting tools.**

(30) Priority: 20.05.82 US 380384
20.05.82 US 380363
20.05.82 US 380381
20.05.82 US 380383

(43) Date of publication of application:
30.11.83 Bulletin 83/48

(45) Publication of the grant of the patent:
23.09.87 Bulletin 87/39

(84) Designated Contracting States:
BE DE FR GB SE

(56) References cited:
EP-A-0 009 859
DE-A-2 600 631
GB-A-2 048 960
GB-A-2 065 715
US-A-4 264 550

CHEMICAL ABSTRACTS, vol. 94, no. 2, January 1981, page 203, no. 7024k, Columbus, Ohio, USA

(73) Proprietor: GTE Laboratories Incorporated
100 W. 10th Street
Wilmington Delaware (US)

(72) Inventor: Sarin, Vinod K.
7 Diamond Road
Lexington, MA 02173 (US)
Inventor: Buljan, Sergej-Tomislav
23 Washington Drive
Acton, MA 01720 (US)

(74) Representative: Patentanwälte Grünecker, Dr. Kinkeldey, Dr. Stockmair, Dr. Schumann, Jakob, Dr. Bezold, Meister, Hilgers, Dr. Meyer-Plath
Maximilianstrasse 58
D-8000 München 22 (DE)

(56) References cited:
TECHNISCHE MITTEILUNGEN KRUPP, vol. 39, no. 1, May 1981, pages 13-22, Essen, DE., U. KÖNIG et al.: "Stand und Perspektive bei der chemischen und physikalischen Abscheidung von Hartstoffen auf Hartmetallen"

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 095 131 B1

**Description**

This invention relates to coated ceramic cutting tools and to a method for manufacturing same. More particularly, the invention relates to a coated ceramic cutting tool comprising a densified silicon nitride substrate body, at least one refractory coating layer and further comprising a densification aid.

A coated ceramic cutting tool of this type is disclosed in JP—A—80 85 481 (corresponding to later published US—A—4 336 305). In particular, said reference of art discloses a ceramic throw-away tip which comprises a hot-pressed sinter comprising silicon nitride as the principle component, on the surface of which is a thin coating of at least one of alumina and aluminium nitride. Furthermore, said conventional ceramic throw-away tip comprises at least one densification aid (sintering assistant) selected from magnesium oxide, yttrium oxide, tantalum oxide, zirconium oxide and aluminium oxide (alumina).

Said conventional ceramic throw-away tip is produced by the following steps:

A thin coating of at least one of alumina and aluminium nitride is formed by chemical vapour phase deposition on a substrate which is produced by hot-pressing a mixture prepared by adding a small amount of at least one of the above-indicated densification aids to a silicon nitride powder.

Cemented carbide materials are well-known for their unique combination of properties of hardness, strength, and wear resistance and have accordingly found extensive use in mining tool bits, metal cutting and boring tools, metal drawing dies, wear resistant machine parts and the like. It is known that the wear resistance of cemented carbide materials may be enhanced by the application of thin coatings of a highly wear resistant material such as titanium carbide or aluminium oxide. These coated carbide materials are finding increased commercial utility for certain cutting tool and machining applications.

Economic pressures for higher productivity in machining applications are placing increasing demands upon the performance of cutting tool materials. To achieve high productivity in machining, a tool must be able to cut at high speeds. As cutting speeds exceed 450 m/mm (1500 surface-feet per minute (sfpm)), the high temperature strength and chemical inertness of a cutting tool material become more and more important. The usefulness of cemented carbide cutting tool materials (the predominant material used in cutting tools today) has been extended to applications requiring cutting speeds of about 450 m/min by coating such tools with aluminium oxide. For cutting speeds in excess of 450 m/min, cemented carbide tools encountered problems associated with loss of strength and tool nose deformation, which affect dimensional tolerance in the workpiece and contribute to shorter tool life.

Conventional ceramic cutting tools overcome many of these disadvantages but have some limitations relating to their lower impact strength and fracture toughness. This is especially true of many alumina-based conventional ceramic cutting tools. Silicon nitride-based ceramic cutting tools have significantly higher impact strength and fracture toughness, but can exhibit lower than desired chemical inertness when employed in cutting long-chipping metals such as steel.

It is therefore an object of the present invention to provide improved cutting tools and a method for producing same.

These and other objects and advantages are achieved in accordance with the present invention wherein there is provided a coated ceramic cutting tool comprising a densified silicon nitride substrate body showing a density equal to or greater than 98% of theoretical density, at least one refractory coating layer and further comprising a densification aid selected from the group consisting of silicon dioxide, aluminium oxide, magnesium oxide, yttrium oxide, hafnium oxide, zirconium oxide, the lanthanide rate earth oxides, and mixtures thereof, said cutting tool being characterized in that said silicon nitride substrate body has been pressureless sintered and has a first phase of silicon nitride and a second refractory phase comprising silicon nitride and an effective amount of said densification aid, further characterized in that said refractory material coating is selected from the group consisting of the nitrides, carbides, carbon nitrides of titanium, vanadium, chromium, zirconium, niobium, molybdenum, hafnium, tantalum, tungsten and mixtures thereof.

Because the refractory intergranular phase is essentially continuous, and because impurities and additives present in the overall composite substrate body tend to concentrate in the intergranular phase during the densifying process, the composition of the intergranular phase profoundly affects the high temperature properties of the densified composite.

Yttrium oxide and hafnium oxide are the preferred densification aids.

The densification aid is employed in amounts from a lower effective amount which permits full densification to an upper amount which does not unduly affect the high temperature properties of the body. Preferably the metal oxide densification aid comprises from about 1 weight percent to about 25 weight percent of the substrate body. More preferably, the metal oxide comprises from about 1 weight percent to about 5 weight percent of the body.

Silicon dioxide may be added to the initial powder mixture employed in the formation of the substrate body or alternatively, may be present as a surface oxide coating on the silicon nitride employed. During subsequent processing of the powder mixture to form the densified composite silicon nitride substrate body, the silicon dioxide and other metal oxide densification aid tend to concentrate in the refractory intergranular phase. It is preferred that the amount of silicon dioxide present in the final densification body comprise

less than about 5 weight percent of the substrate body.

The intergranular phase of the substrate may contain further additional materials in the form of additives or impurities in addition to the above-mentioned silicon dioxide and metal oxide densification aids. Such further additional materials are preferably present in amounts less than about 5 weight percent of the host matrix.

The starting silicon nitride powder employed in the preparation of the ceramic substrate bodies of tools in accordance with this invention may be partly crystallized amorphous material, a mixture of substantially amorphous and substantially crystalline material, or substantially completely crystalline material. The starting material may be processed to a powder compact of adequate green strength by thoroughly mixing with any binders or pressing aids which may be employed, for example by ball milling in a non-reactive medium such as toluene or methanol, and subsequently consolidating the mixture by pressing, extruding, or slip casting. Processing may also optionally include a pre-sintering or prereacting step in which either the uncompacted powder or the powder compact is heated at moderate temperatures such as from about 500°C to about 1000°C in order to remove any binders and volatile solvents and to partially react the starting materials.

The substrate bodies of cutting tools of this invention are made by compacting the above-mentioned components to a highly dense article by pressureless sintering. Since the strength of the resulting cutting tools decreases with increasing porosity of the compact, it is important that the compact be densified to a density as closely approaching theoretical density as possible.

It has been found that mechanical mixing of the powdered components of the cutting tools of this invention results in smaller or larger inhomogeneities in the distribution of the modifying phase. These inhomogeneities may be of the order of 5 to 300 μm in size, resulting in undesired localized variation in properties of the matrix.

Homogeneity of the cutting tool material is an extremely important factor for tool performance. During cutting, only a small portion of the cutting tool is exposed to high stress and elevated temperatures. The temperature induced changes in mechanical properties, which are also compositionally dependent, contribute to fracture and chipping at the tool edge, in turn contributing to the rate of tool wear.

The powder blends employed as starting mixtures for tool substrates of this invention are densified to a density of at least 98% of theoretical by pressing followed by pressureless sintering. Sintering is carried out without pressure at temperatures ranging between about 1400°C and about 1700°C for at least one hour, and preferably at temperatures between about 1600°C and 1600°C for about 1.5 to about 5 hours. Sintering is preferably carried out in a non-reactive atmosphere to prevent formation of undesirable oxide or oxynitride phases.

The following examples are provided to enable one skilled in the art to practice the present invention and should not be viewed as limiting the scope of the invention as defined by the appended claims.

Typical Preparation of the Substrate Body

A 68 gram batch of silicon nitride powder containing 5 weight percent magnesium oxide sintering additive was mixed with 159.8 grams of toluene, 5.44 grams of methanol and 2.04 grams of magnesium stearate. The batch was thoroughly mixed by milling in a two quart polyethylene jar with about 2000 grams of milling medium for 1/2 hour. The resulting slurry was dried at about 105°C and the dry batch was dry ball milled in a polyethylene jar for 24 hours. To this dry ball milled batch were added 2.04 grams of Carbowax, 68 grams of toluene, and 2.04 grams of methanol. The resulting mixture was milled for fifteen minutes and the resulting slurry was dried at about 105°C. The dried powder mixture was screened through a 250 micron screen and the less than 250 μm fraction was pressed at about 172.4 MPa to obtain a green powder compact.

The magnesium stearate and Carbowax binders were removed by heating the green compact at a rate of about 50°C per hour to a temperature of about 600°C and maintaining the final temperature for about 4 hours in air. The compact was sintered at 1700°C for about 5 hours to produce a densified silicon nitride body having substantially full density.

In accordance with the principles of the present invention, the substrate body is coated with at least one hard, adherent coating layer comprising a refractory material. Typical refractory materials include alumina, the nitrides, carbides and carbonitrides or titanium, vanadium, chromium, zirconium, niobium, molybdenum, hafnium, tantalum, and tungsten. Preferred coatings in accordance with this invention are alumina, titanium carbide, titanium carbonitride, titanium nitride and hafnium carbide. hafnium carbonitride and hafnium nitride. The coating layer is of a thickness ranging between about 0.1 μm to about 10 μm, preferably between about 1.0 and about 10 μm.

Coating Methods

The composite substrate body produced by the methods detailed are coated with a refractory material by chemical vapor deposition techniques or physical vapor deposition techniques. For example, the preferred coatings of alumina, titanium carbide, titanium carbonitride, titanium nitride or hafnium carbide, hafnium carbonitride or hafnium nitride are applied by chemical vapor deposition. other refractory materials are applied by chemical vapor deposition techniques where such techniques are applicable, or by physical vapor deposition techniques such as direct evaporation, sputtering, etc. Alternatively, the refractory material itself may be deposited by chemical or physical deposition techniques and subsequently nitrided to produce a refractory metal

nitride coating.

Useful characteristics of the chemical vapor deposition method are the purity of the deposited layer and the tendency for some diffusional interaction between the layer being deposited and the substrate during early stages of the deposition process which leads to good layer adherency.

As an example, titanium nitride layers are formed on the composite silicon nitride substrates of cutting tools of this invention by passing a gaseous mixture of titanium tetrachloride, a gaseous nitrogen source such as nitrogen or ammonia, and hydrogen over the substrate at a temperature of between about 800°C and 1500°C, preferably at temperatures above about 1000°C. The reaction is described by the following equation; hydrogen is added to insure that the reaction takes place in a reducing environment:

$$2\ TiCL_4 + N_2 + 4\ H_2 = 2\ TiN + 8\ HCl$$

The mixture is passed over the heated substrate until the desired coating thickness is achieved. Routine experimentation is used to determine the rate of coating thickness growth at a particular gaseous flow rate and temperature.

As another example, titanium carbide layers are formed on the silicon nitride substrate bodies of cutting tools of this invention by passing a gaseous mixture of titanium tetrachloride, a gaseous carbon source such as methane, and hydrogen over the substrate at a temperature of between about 800°C and 1500°C, preferably at temperatures above about 1000°C. The reaction is described by the following equation, although hydrogen is often added to insure that the reaction takes place in a reducing environment:

$$TiCl_4 + CH_4 = TiC + 4\ HCl$$

The mixture is passed over the heated substrate until the desired coating thickness is achieved. Routine experimentation is used to determine the rate of coating thickness growth at a particular gaseous flow rate and temperature.

As another example, titanium carbonitride layers are formed on the composite silicon nitride substrates of cutting tools of this invention in the chemical vapor deposition technique by passing a gaseous mixture of titanium tetrachloride, a gaseous carbon source such as methane, a gaseous nitrogen source such as nitrogen or ammonia, and hydrogen over the substrate at a temperature of between about 800°C and 1500°C, preferably at temperatures above about 1200°C. Dissociated ammonia may be substituted for a mixture of nitrogen and hydrogen gases. The reaction is described by the following equation, although hydrogen is often added to insure that the reaction takes place in a reducing environment:

$$TiCL_4 + CH_4 + N_2 = Ti(C_xN_y) + 4HCl$$

The mixture is passed over the heated substrate until the desired coating thickness is achieved. Routine experimentation is used to determine the rate of coating thickness growth at a particular gaseous flow rate and temperature.

Control of the amounts of methane and nitrogen in the gas mixture permit the formation of layers in which the ratio of x to y in the formula $Ti(C_xN_y)$ are varied. The preferred values of x and y range between about 0.5 to about 0.6 for x and from about 0.4 to about 0.5 for y resulting in a preferred range of x/y ratio of from about 1.0 to about 1.5. The most preferred ratio of x to y is about 1.22, corresponding to values for x and y of about 0.55 and about 0.45, respectively.

While there have been shown and described what are at present believed to be the preferred embodiments of the present invention, it will be obvious to those skilled in the art that various changes and modifications may be made therein without departing from the scope of the invention as defined by the appended claims.

**Claims**

1. A coated ceramic cutting tool comprising a densified silicon nitride substrate body showing a density equal to or greater than 98% of theoretical density, at least one refractory coating layer and further comprising a densification aid selected from the group consisting of silicon dioxide, aluminium oxide, magnesium oxide, yttrium oxide, hafnium oxide, zirconium oxide, the lanthanide rare earth oxides, and mixtures thereof, characterized in that said silicon nitride substrate body has been pressureless sintered and has a first phase of silicon nitride and a second refractory phase comprising silicon nitride and an effective amount of said densification aid, and in that said refractory material coating is selected from the group consisting of the nitrides, carbides, carbon nitrides of titanium, vanadium, chromium, zirconium, niobium, molybdenum, hafnium, tantalium, tungsten and mixtures thereof.

2. A coated ceramic cutting tool in accordance with claim 1, characterized in that silicon dioxide is present in the final densified body in an amount which comprises less than about 5 weight percent of the substrate body.

3. A method for the manufacture of a coated ceramic cutting tool comprising a silicon nitride substrate body densified to equal or greater than 98% of theoretical density and having at least one refractory coating layer and further comprising a densification aid selected from the group consisting of silicon dioxide, aluminium oxide, magnesium oxide, yttrium oxide, hafnium oxide, zirconium oxide, the lanthanide rate earth oxides, and mixtures thereof, characterized in that said silicon nitride substrate body is pressureless sintered such that is comprises a first phase of silicon nitride and a second refractory phase comprising silicon nitride and an effective amount of said densification aid and in that said refractory material coating is selected from the group consisting of the nitrides, carbides, carbon

nitrides of titanium, vanadium, chromium, zirconium, niobium, molybdenum, hafnium, tantalium, tungsten and mixtures thereof.

**Patentansprüche**

1. Ein beschichtetes, keramisches Schneidwerkzeug mit einem aus verdichtetem Siliciumnitrid bestehenden Substratkörper, dessen Dichte gleich oder größer ist als 98 % der theoretischen Dichte, wenigstens einer Beschichtungsschicht aus einem Feuerfestmaterial und ferner mit einem Sinterhilfsmittel, ausgewählt aus der aus Siliciumdioxid, Aluminiumoxid, Magnesiumoxid, Yttriumoxid, Hafniumoxid, Zirkoniumoxid, den Oxiden der lanthanidischen seltenen Erden sowie Mischungen derselben bestehenden Gruppe, dadurch gekennzeichnet,

daß der Siliciumnitrid-Substratkörper drucklos gesintert worden ist und eine erste Phase aus Siliciumnitrid und eine zweite Siliciumnitrid enthaltende Phase aus Feuerfestmaterial sowie eine wirksame Menge des Sinterhilfsmittels aufweist, und daß die aus Feuerfestmaterial bestehende Beschichtung ausgewählt ist aus der aus den Nitriden, Carbiden und Carbonitriden des Titans, Vanadiums, Chroms, Zirkoniums, Niobs, Molybdäns, Hafniums, Tantals, Wolframs und Mischungen derselben bestehenden Gruppe.

2. Beschichtetes, keramisches Schneidwerkzeug nach Anspruch 1, dadurch gekennzeichnet, daß das Siliciumdioxid im fertig verdichteten Körper in einer Menge vorliegt, welche weniger als etwa 5 Gew.-% des Substratkörpers beträgt.

3. Verfahren zur Herstellung eines beschichteten, keramischen Schneidwerkzeugs mit einem aus Siliciumnitrid bestehenden Substratkörper, der auf gleich oder mehr als 98 % seiner theoretischen Dichte verdichtet ist und wenigstens eine Beschichtungsschicht aus einem Feuerfestmaterial aufweist und ferner ein Sinterhilfsmittel enthält, welches ausgewählt ist aus der aus Siliciumdioxid, Aluminiumoxid, Magnesiumoxid, Yttriumoxid, Hafniumoxid, Zirkoniumoxid, den Oxiden der lanthanidischen seltenen Erden sowie Mischungen derselben bestehenden Gruppe, dadurch gekennzeichnet,

daß der Siliciumnitrid-Substratkörper drucklos derart gesintert wird, daß er eine erste Phase aus Siliciumnitrid und eine zweite Siliciumnitrid enthaltende Phase aus Feuerfestmaterial sowie eine wirksame Menge des Sinterhilfsmittels enthält, und daß die Beschichtung aus Feuerfestmaterial ausgewählt wird aus der aus den Nitriden, Carbiden und Carbonitriden des Titans, Vanadiums, Chroms, Zirkoniums, Niobs, Molybdäns, Hafniums, Tantals, Wolframs und Mischungen derselben bestehenden Gruppe.

**Revendications**

1. Outil de coupe revêtu de céramique comprenant un substrat en nitrure de silicium densifié présentant une densité supérieure ou égale à 98 % de la densité théorique, au moins une couche d'un revêtement réfractaire, et comprenant en outre un aide à la densification choisi dans le groupe comprenant le bioxyde de silicium, l'alumine, l'oxyde de magnésium, l'oxyde d'yttrium, l'oxyde d'hafnium, l'oxyde de zirconium, les oxydes de lanthanes, et les mélanges de ceux-ci, caractérisé en ce que le dit substrat en nitrure de silicium a été fritté sans pression et présente une première phase de nitrure de silicium et une seconde phase réfractaire comprenant du nitrure de silicium et une quantité effective du dit aide à la densification, et en ce que le dit revêtement en matériau réfractaire est choisi dans le groupe comprenant les nitrures, les carbures, les nitrures au carbone de titane, de vanadium, de chrome, de zirconium, de niobium, de molybdène, d'hafnium, de tantale, de tungstène, et les mélanges de ceux-ci.

2. Outil de coupe revêtu de céramique selon la revendication 1 caractérisé en ce que la quantité de bioxyde de silicium présent dans le corps densifié final est inférieure à 5 % environ en poids du substrat.

3. Procédé de fabrication d'un outil de coupe revêtu de céramique comprenant un substrat en nitrure de silicium densifié de manière à présenter une densitè supérieure ou égale à 98 % de la densité théorique et ayant au moins une couche d'un revêtement réfractaire, et comprenant en outre un aide à la densification choisi dans le groupe comprenant le bioxyde de silicium, l'alumine, l'oxyde de magnésium, l'oxyde d'yttrium, l'oxyde d'hafnium, l'oxyde de zirconium, les oxydes des lanthanes, et les mélanges de ceux-ci, caractérisé en ce que le dit substrat en nitrure de silicium est fritté sans pression, de telle manière qu'il comprenne une première phase de nitrure de silicium et une seconde phase réfractaire comprenant du nitrure de silicium et une quantité effective du dit aide à la densification, et en ce que le dit revêtement en matériau réfractaire est choisi dans le groupe comprenant les nitrures, les carbures, les nitrures au carbone de titane, de vanadium, de chrome, de zirconium, de niobium, de molybdène, d'hafnium, de tantale, de tungstène, et les mélanges de ceux-ci.